# EUROPEAN PATENT SPECIFICATION

(11) **EP 2 275 238 B1**
(45) Date of publication and mention of the grant of the patent: **17.06.2015**
(21) Application number: 10169939.5
(22) Date of filing: 17.07.2010
(51) Int. Cl.: B27B 5/065, B28B 1/00, B28D 1/00

(54) **Cuttingmachine for wooden panels or panels made of similar materials**
Maschine für das Schneiden von Holzpaneelen oder Paneelen aus ähnlichem Material
Machine pour la découpe de panneaux de bois ou de matériaux similaires

(30) Priority: 17.07.2009 IT BO20090461
(43) Date of publication of application: 19.01.2011
(73) Proprietor: BIESSE S.p.A., Pesaro (IT)
(72) Inventor: Bernardi, Paolo, 47841 Cattolica (IT)
(74) Representative: Bergadano, Mirko

(56) References cited:
- EP-A1- 1 815 954
- EP-A1- 2 127 829
- EP-A2- 0 470 350
- EP-A2- 1 927 446
- WO-A1-2006/024058
- DE-A1- 19 620 391
- DE-A1- 19 963 863
- DE-U1- 29 607 976
- US-A- 4 382 728

## Description

The present invention relates to a machine for cutting panels made of wood or the like, according to the preamble of claim 1. Such a machine for cutting panels is known from document WO2006024058A1.

In the field of cutting panels made of wood it is known to provide a machine comprising a base defining a substantially horizontal resting surface for at least one panel made of wood or the like; a feeding unit, adapted to feed the panel along the resting surface and through a cutting station; and a supporting carriage, mounted at the cutting station to move a blade on a cutting surface substantially orthogonal to a feed direction of the panel itself. The machine is further provided with an auxiliary cutting device, normally comprising a milling tool, which is mounted on the supporting carriage of the blade and is mobile from and to a raised operative position, in which the milling tool protrudes over the resting surface and cooperates with the feeding unit to cut the panel parallel to the feed direction of the panel itself. The base normally comprises two supporting devices, which are arranged on opposite sides of the cutting surface in the feed direction of the panel and are mobile with respect to one another in the feed direction between a first operative position, wherein the supporting devices define a feed channel slidingly engaged by the blade, and a second operative position, wherein the supporting devices move away from one another to allow the raising of the milling tool.

From the above it derives that the machines for cutting panels known of the type described above are relatively complex and costly, and that the use of the auxiliary cutting device requires the making of specific bases and supporting carriages which cannot be applied to the standard sawing machines currently made and commercialized and possibly already installed at the customer's facilities.

It is an object of the present invention to provide a machine for cutting panels made of wood or the like, which is free from the above-described drawbacks, and which is simple and cost-effective to be implemented.

According to the present invention, there is provided a machine for cutting panels made of wood or the like as disclosed in the appended claims.

The present invention will now be described with reference to the accompanying drawings, which illustrate a non-limitative embodiment thereof, in which:
figure 1 is a diagrammatic plan view, with parts removed for clarity, of a preferred embodiment of the machine of the present invention;
figure 2 is a diagrammatic side view, with parts removed for clarity, of the machine in figure 1; and
figure 3 is a diagrammatic side view, with parts removed for clarity, of a detail in figure 2.

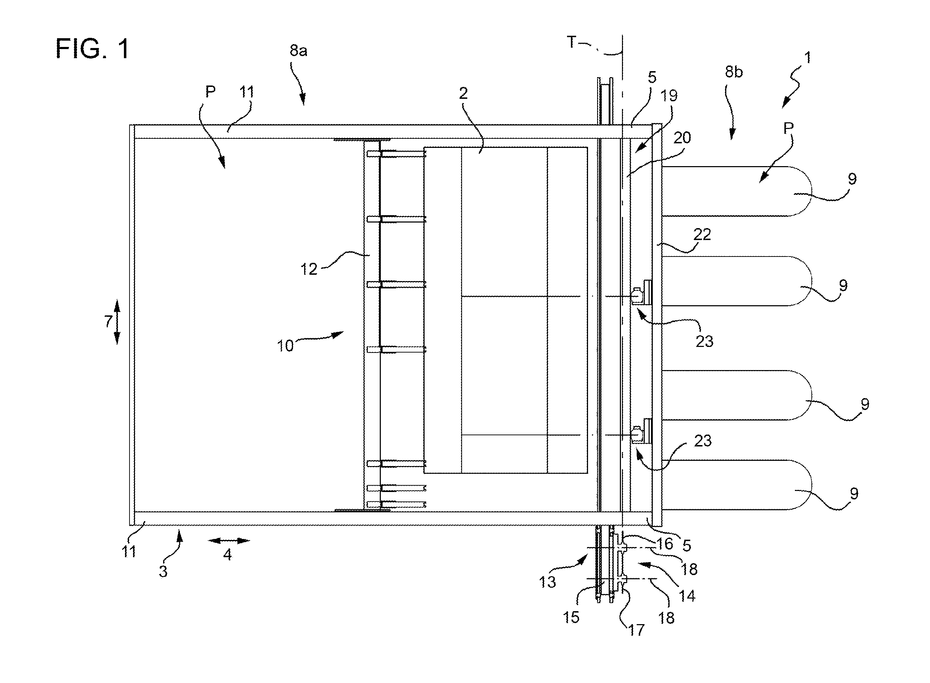

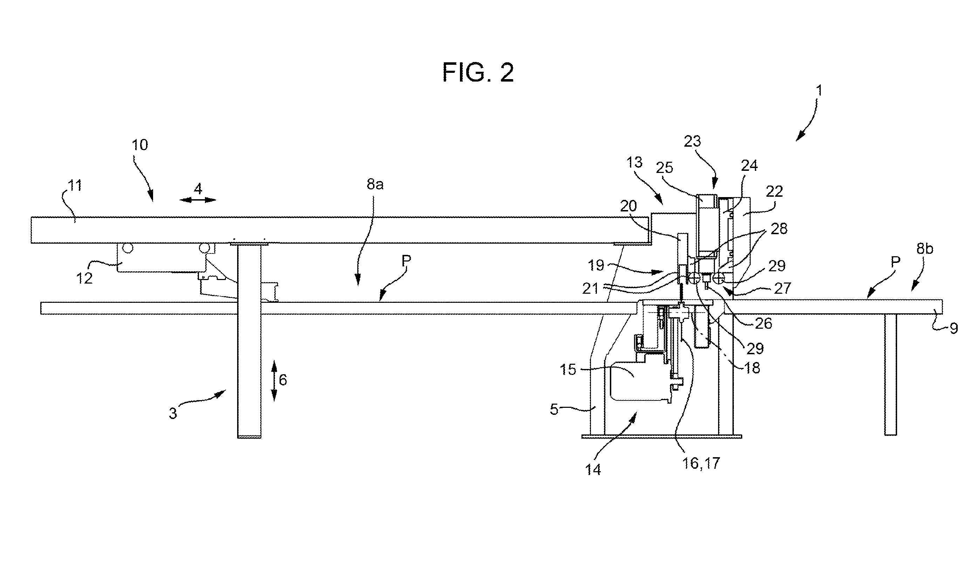

With reference to figures 1 and 2, numeral 1 indicates as a whole a machine for cutting panels 2 made of wood or the like having a substantially parallelepiped shape and a substantially rectangular section.

The machine 1 comprises an elongated base 3, which extends in a horizontal direction 4, and comprises, in turn, two vertical uprights 5 parallel to one another, which extend in a direction 6 transversal to direction 4, and are connected to each other by means of a horizontal crosspiece (not shown) parallel to a direction 7 orthogonal to directions 4 and 6.

The base 3 further comprises two supporting devices 8, which are arranged on opposite sides of the uprights 5 in direction 4, define a resting surface P for at least one pack of panels 2 stacked on top of one another, one of which (hereinafter indicated by reference numeral 8a) comprises a plurality of supporting rollers (not shown) parallel to direction 7 and the other (hereinafter indicated by reference numeral 8b) four beds 9 parallel to one another and to direction 4 itself.

The device 8a cooperates with a gripping and conveying unit 10 comprising two longitudinal guide members 11 parallel to one another, which extend over the surface P of the device 8a in direction 4, each having a free end fixed to a respective upright 5, and support a feed device 12 of known type, which extends between the two longitudinal members 11 in direction 7, and is mobile along the longitudinal members 11 in direction 4 to advance the panels 2 through a cutting station 13 obtained at the uprights 5.

Station 13 is provided with a cutting assembly 14 comprising a carriage 15, which extends underneath the surface P, is coupled in known manner to the base 3 to carry out rectilinear movements toward direction 7 with respect to the base 3 and under the bias of an actuating device (known and not shown), and supports a blade 16 and a engraver 17 mounted on the carriage 15 to turn about respective longitudinal axes 18 parallel to one another and to direction 4.

The blade 16 and the engraver 17 are coupled in known manner to the carriage 15 to carry out, with respect to the carriage 15, rectilinear movements in direction 6, between respective lowered rest positions, in which the blade 16 and the engraver 17 are arranged underneath the surface P to allow advancing the panels 2 along the surface P, and respective raised operative positions, in which the blade 16 and the engraver 17 protrude over the surface P itself to cut the panels 2.

Furthermore, the blade 16 and the engraver 17 are moved by the carriage 15 in direction 7 and along a cutting surface T orthogonal to direction 4 with a reciprocating rectilinear motion comprising an outward stroke, in which the engraver 17, arranged in front of the blade 10 in the feed direction 7 of the carriage 15, engraves the lower panel 2 of each pack of panels 2 and the blade 16 cuts the panels 2 of the pack 6 itself, and a return stroke.

The cutting assembly 14 cooperates with a pressing device 19 of known type comprising a bar 20, which extends over the surface P in direction 7, is fork-shaped, is provided with two arms 21 parallel to each another arranged on opposite sides of the surface T in direction 4, and is slidingly coupled to the uprights 5 to carry out rectilinear movements in direction 6 with respect to the uprights 5 and under the bias of an actuating device (known and not shown) between a raised rest position and a lowered operative position, wherein the panels 2 are blocked on the surface P and are cut by the cutting assembly 14 parallel to direction 7.

As shown in figures 1, 2, and 3, the base 3 further comprises a crosspiece 22, which extends over the surface P in direction 7, is fixed onto the two uprights 5 downstream of the surface T and on opposite side by the longitudinal members 11 in direction 4, and supports, in the case in point, two auxiliary cutting devices 23, each of which comprises a slide 24, slidingly coupled to the crosspiece 22 to carry out rectilinear movements along the crosspiece 22 itself in direction 7.

The slide 24 supports an electrospindle 25, which extends in direction 6, is coupled in known manner to the slide 24 to carry out, with respect to the slide 24 itself, rectilinear movements in direction 6 between a lowered operative position and a raised rest position, is adapted to receive and withhold a cutting tool 26, in the case in point a milling tool, and is mobile in directions 6, 7 independently from the electrospindle 25 of the other device 23.

The two devices 23 cooperate with a pressing device 27 comprising two supporting bars 28, which extends in direction 7, are slidingly coupled one to the bar 20 and the other to the crosspiece 22, and support two pressing rollers 29, which extend in direction 7, are mounted on opposite sides to the tools 26 in direction 4, and are rotatably coupled to the respective bars 28 to turn, with respect to the respective bars 28 themselves, about respective longitudinal axes 30 parallel to one another.

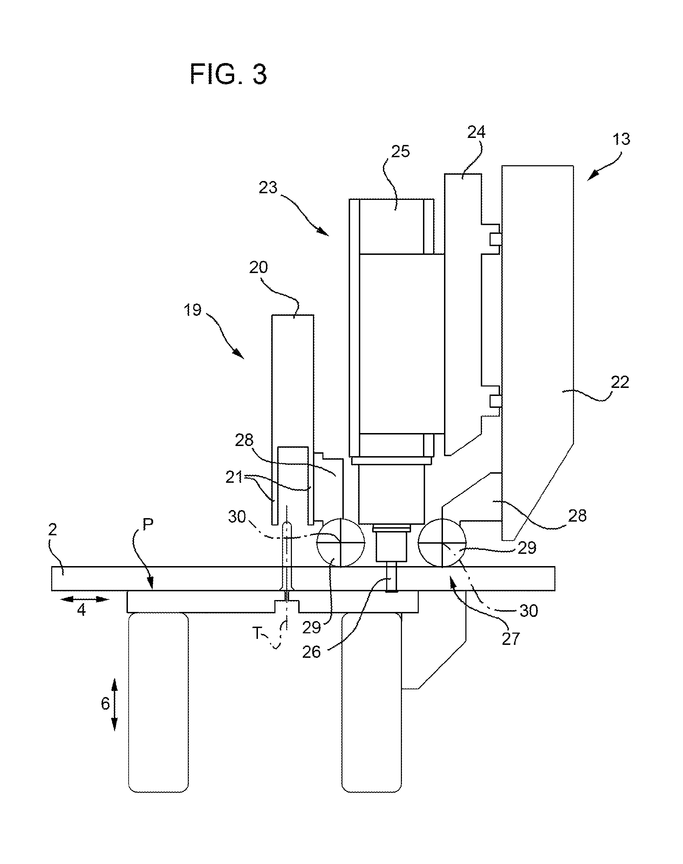

The rollers 29 are moved from the respective bars 28 in direction 6 between a raised rest position (not shown) and a lowered operative position (figure 3), wherein the panels 2 are clamped against the surface P and are cut parallel to direction 4 combining the action of the gripping and conveying unit 10 with the action of the auxiliary cutting devices 23.

The machine 1 has some advantages mainly deriving from the fact that the assembly of the crosspiece 22 and of the auxiliary devices 23 is relatively simple and cost-effective without requiring substantial changes to the standard sawing machines currently made, commercialized and possibly already installed at the customer's facilities.

## Claims

1. A machine for cutting panels (2) made of wood or the like, the machine comprising a base (3) defining a resting surface (P) for at least one panel (2) and comprising two longitudinal guide members (11) and two vertical uprights (5) supporting the longitudinal members (11); a cutting station (13); a feeding unit (10) slidingly engaged in the longitudinal guide members (11) for moving the panel (2) along the resting surface (P) and through the cutting station (13) in a given first direction (4); a blade (16) supported by the vertical uprights (5) and mounted on a carriage (15) to move along a cutting surface (T) substantially orthogonal to the first direction (4) and to move, with respect to the carriage (15), between a lowered rest position, in which the blade (16) is arranged underneath the resting surface (P) to allow advancing the panel (2) along the resting surface (P), and a raised operative position, in which the blade (16) protrudes over the resting surface (P) itself to cut the panel (2); and a first pressing device (19) adapted to lock the panel (2) against the resting surface (P) during the action of said blade (16), the first pressing device (19) comprising a bar (20), which extends over the resting surface (P) in a second direction (7) substantially transversal to the first direction (4), is fork-shaped, is slidingly coupled to the vertical uprights (5) to carry out rectilinear movements in a third direction (6) substantially orthogonal to the resting surface (P), and is provided with two arms (21) parallel to each other arranged on opposite sides of the cutting surface (T) in the first direction (4); the base (3) further comprising a crosspiece (22), which extends over the resting surface (P) in the second direction (7), and supports an auxiliary cutting device (23) movable along the crosspiece (22) in the second direction (7) and further movable in the third direction (6) between a raised rest position and a lowered operative position; and being **characterized in that** the crosspiece (22) is fixed to the two uprights (5) on the side opposite to the longitudinal members (11).

2. A machine according to claim 1, wherein the auxiliary cutting device (23) comprises an electrospindle (25) movable in the third direction (6) and a milling tool (26) engaged on the electrospindle (25) itself.

3. A machine according to claim 1 or 2 and further comprising a second pressing device (27) adapted to hold the panel (2) against the resting surface (P) during the action of said auxiliary cutting device (23).

4. A machine according to claim 3, wherein the second pressing device (27) comprises at least two pressing rollers (29) slidingly coupled to the first pressing device (19) and to the crosspiece (22), respectively, to carry out straight movements in the third direction (6).

## Patentansprüche

1. Maschine zum Schneiden von Tafeln (2) aus Holz oder dergleichen, umfassend eine Basis (3), die eine Ruhefläche (P) für wenigstens eine Tafel (2) bildet und zwei Längsführungen (11) sowie zwei vertikale Stützen (5) umfasst, die die Längsführungen (11) tragen; eine Schneidstation (13); eine Zufuhreinheit (10), die gleitend in die Längsführungen (11) eingreift, um die Tafel (2) entlang der Ruhefläche (P) sowie durch die Schneidstation (13) in einer gegebenen ersten Richtung (4) zu bewegen; ein Schneidblatt (16), getragen von den vertikalen Stützen (5) und montiert auf einem Wagen (15), um entlang einer Schneidfläche (T) im Wesentlichen senkrecht zur ersten Richtung (4) zu verfahren und sich in Bezug auf den Wagen (15) zu bewegen zwischen einer abgesenkten Ruheposition, in welcher sich das Schneidblatt (16) unterhalb der Ruhefläche (P) befindet, um ein Vorschieben der Tafel (2) entlang der Ruhefläche (P) zu ermöglichen, und einer angehobenen Betriebsposition, in welcher das Schneidblatt (16) über die Ruhefläche (P) vorragt, um die Tafel (2) zu schneiden; und einer ersten Presseinrichtung (19) zum Verriegeln der Tafel (2) an der Ruhefläche (P) während des Arbeitens des Schneidblattes (16), wobei die erste Presseinrichtung (19) einen Stab (20) umfasst, der sich über die Ruhefläche (P) in einer zweiten Richtung (7) im Wesentlichen quer zur ersten Richtung (4) erstreckt, gabelförmig ist und gleitend an die vertikalen Stützen (5) angekoppelt ist, um geradlinige Bewegungen in einer dritten Richtung (6) im Wesentlichen senkrecht zur Ruhefläche (P) auszuführen, und versehen ist mit zwei Armen (21), die parallel auf zueinander auf gegenüberliegenden Seiten der Schneidfläche (T) in der ersten Richtung (4) angeordnet sind; die Basis (3) umfasst ferner ein Querteil (22) das sich über die Ruhefläche (P) in der zweiten Richtung (7) erstreckt und eine Hilfsschneideinrichtung (23) trägt, die entlang des Querteiles (22) in der zweiten Richtung (7) bewegbar ist sowie in der dritten Richtung (6) zwischen einer angehobenen Ruheposition und einer abgesenkten Betriebsposition,
**dadurch gekennzeichnet, dass** das Querteil (22) an den beiden Stützen (5) auf der den Längsführungen (11) gegenüberliegenden Seite befestigt ist.

2. Maschine nach Anspruch 1, wobei die Hilfsschneideinrichtung (23) eine elektrisch angetriebene Spindel (25) umfasst, beweglich in der dritten Richtung (6), sowie ein Fräswerkzeug (26), das auf der Elektrospindel (25) sitzt.

3. Maschine nach Anspruch 1 oder 2, weiterhin umfassend eine zweite Presseinrichtung (27), die die Tafel (2) während des Arbeitens der Hilfsschneideinrichtung (23) an die Ruhefläche (P) andrückt.

4. Maschine nach Anspruch 3, wobei die zweite Presseinrichtung (27) wenigstens zwei Presswalzen (29) aufweist, die gleitend an die erste Presseinrichtung (19) beziehungsweise an das Querteil (22) angekoppelt sind, um in der dritten Richtung (6) geradlinige Bewegungen auszuführen.

## Revendications

1. Machine pour découper des panneaux (2) en bois ou similaire, la machine comprenant une base (3) définissant une surface d'appui (P) pour au moins un panneau (2) et comprenant deux éléments de guidage longitudinaux (11) et deux montants verticaux (5) supportant les éléments longitudinaux (11) ; une station de découpe (13) ; une unité d'alimentation (10) mise en prise de manière coulissante dans les éléments de guidage longitudinaux (11) pour déplacer le panneau (2) le long de la surface d'appui (P) à travers la station de découpe (13) dans une première direction (4) donnée ; une lame (16) supportée par les montants verticaux (5) et montée sur un chariot (15) pour se déplacer le long d'une surface de découpe (T) sensiblement orthogonale à la première direction (4) et pour se déplacer, par rapport au chariot (15), entre une position d'appui abaissée dans laquelle la lame (16) est agencée au-dessous de la surface d'appui (P) pour permettre de faire avancer le panneau (2) le long de la surface d'appui (P) et une position de fonctionnement levée, dans laquelle la lame (16) fait saillie sur la surface d'appui (P) elle-même pour découper le panneau (2) ; et un premier dispositif de pression (19) adapté pour bloquer le panneau (2) contre la surface d'appui (P) pendant l'action de ladite lame (16), le premier dispositif de pression (19) comprenant une barre (20) qui s'étend sur la surface d'appui (P) dans une deuxième direction (7) sensiblement transversale par rapport à la première direction (4), est en forme de fourche, est couplé de manière coulissante aux montants verticaux (5) pour réaliser des mouvements rectilignes dans une troisième direction (6) sensiblement orthogonale à la surface d'appui (P), et est prévu avec deux bras (21) parallèles entre eux, agencés sur les côtés opposés de la surface de découpe (T) dans la première direction (4) ; la base (3) comprenant en outre une traverse (22) qui s'étend sur la surface d'appui (P) dans la deuxième direction (7), et supporte un dispositif de découpe auxiliaire (23) mobile le long de la traverse (22) dans la deuxième direction (7) et mobile en outre dans la troisième direction (6) entre une position d'appui levée et une position opérationnelle abaissée ; et étant **caractérisée en ce que** la traverse (22) est fixée sur les deux montants (5) du côté opposé aux éléments longitudinaux (11).

2. Machine selon la revendication 1, dans laquelle le dispositif de découpe auxiliaire (23) comprend une broche électrique (25) mobile dans la troisième direction (6) et un outil de fraisage (26) mis en prise sur la broche électrique (25) elle-même.

3. Machine selon la revendication 1 ou 2, et comprenant en outre un second dispositif de pression (27) adapté pour maintenir le panneau (2) contre la surface d'appui (P) pendant l'action dudit dispositif de découpe auxiliaire (23).

4. Machine selon la revendication 3, dans laquelle le second dispositif de pression (27) comprend au moins deux rouleaux de pression (29) couplés de manière coulissante au premier dispositif de pression (19) et à la traverse (22), respectivement, pour réaliser des mouvements droits dans la troisième direction (6).
